# EUROPEAN PATENT APPLICATION

(11) **EP 3 888 591 A1**
(43) Date of publication of application: **06.10.2021**
(21) Application number: 19909034.1
(22) Date of filing: 17.01.2019
(51) Int. Cl.: A61C 17/02

(54) **ORAL IRRIGATOR**

(30) Priority: 10.01.2019 CN 201910024316
(71) Applicant: Shanghai Shift Electrics Co., Ltd., Shanghai 201506 (CN); Liu, Dalei, Jinshan Industrial Zone Shanghai 201506 (CN)
(72) Inventor: XU, Zhenwu, Shanghai 201506 (CN); LIU, Dalei, Shanghai 201506 (CN)
(74) Representative: Gulde & Partner
(86) International application number: PCT/CN2019/072229
(87) International publication number: WO 2020/143073

(57) **Abstract**

An oral irrigator, comprising: a first pumping assembly (200) used for pumping a first working medium for oral irrigation; a second pumping assembly (300) used for pumping a second working medium for oral irrigation; and a nozzle (400) in fluid communication with output ends of the first pumping assembly (200) and the second pumping assembly (300), the first working medium for oral irrigation and/or the second working medium for oral irrigation being ejected by means of the nozzle (400).

## Description

### TECHNICAL FIELD

The present invention relates to the field of personal care, in particular to an oral irrigator.

### BACKGROUND

The current oral irrigator typically comprises a single-cylinder water pump. Due to unbalanced reciprocating inertial force of the single-cylinder water pump during operation, the vibration is large. The impact of vibration and noise during use makes the user experience become worse. The product life is also seriously affected due to the impact of vibration. At the same time, most of this structure can merely spray water, since there is only one water pump.

### SUMMARY

On this basis, it is necessary to provide a new oral irrigator for the aforementioned technical problems.

According to the present invention, there is provided an oral irrigator, comprising: a first pumping assembly used for pumping a first working medium for oral irrigation; a second pumping assembly used for pumping a second working medium for oral irrigation; and a nozzle in fluid communication with output ends of the first pumping assembly and the second pumping assembly, wherein the first working medium for oral irrigation and/or the second working medium for oral irrigation is sprayed out by means of the nozzle.

Specifically, the first pumping assembly and the second pumping assembly both comprise a positive displacement pump. More specifically, the positive displacement pump is a piston pump, a plunger pump, a gear pump, a sliding plate pump or a diaphragm pump.

In an embodiment, the first pumping assembly and the second pumping assembly both comprise a piston pump. Specifically, the first pumping assembly and the second pumping assembly comprise a driving assembly and a piston cylinder assembly, wherein the piston cylinder assembly is driven by the driving assembly. More specifically, the piston cylinder assembly comprises a cylinder and a piston movably connected with the cylinder. More specifically, the driving assembly comprises a driving source and a transmission assembly. More specifically, the driving source comprises a motor. More specifically, the transmission assembly comprises a gear set and a connecting rod, wherein the gear set comprises a driving gear connected to an output end of the motor and a driven gear engaged with the driving gear, one end of the connecting rod is connected to the driven gear, and another end is connected to the piston of the piston cylinder assembly in a transmission connection way. More specifically, the driven gear is a face gear.

In an embodiment, the first pumping assembly and the second pumping assembly are configured such that both can operate simultaneously to spray out mixed the first working medium and the second working medium at the nozzle, wherein the first working medium and the second working medium may be the same or different.

In another embodiment, the first pumping assembly and the second pumping assembly are configured such that both can operate alternately to spray out mixed the first working medium and second working medium at the nozzle, wherein the first working medium and the second working medium may be the same or different.

In an example, the first working medium and the second working medium both comprises water.

In another example, the first working medium comprises water, and the second working medium comprises air.

Preferably, the nozzle comprises a nozzle body and a housing, a first end of the nozzle body is in fluid communication with output ends of the first pumping assembly and the second pumping assembly; an outlet is defined on the housing, the housing is connected to a second end of the nozzle body, and the housing and the nozzle body define an accommodating cavity in fluid communication with outside air; wherein the first working medium for oral irrigation and/or the second working medium for oral irrigation enters the accommodating cavity through the nozzle body and is sprayed out through the outlet after being mixed with the outside air.

According to the present invention, there is further provided an oral irrigator, comprising: a base; a driving assembly fixed to the base; a first piston cylinder assembly fixed to the base and driven by the driving assembly for pumping a first working medium for oral irrigation; a second piston cylinder assembly fixed to the base and driven by the driving assembly for pumping a second working medium for oral irrigation; and a nozzle in fluid communication with output ends of the first piston cylinder assembly and the second piston cylinder assembly, wherein the first working medium for oral irrigation and/or the second working medium for oral irrigation is sprayed out by means of the nozzle.

Specifically, the first piston cylinder assembly comprises a first cylinder and a first piston movably connected with the first cylinder, and the second piston cylinder assembly comprises a second cylinder and a second piston movably connected with the second cylinder, the first piston and the second piston is driven by the driving assembly. More specifically, the driving assembly comprises a driving source and a transmission assembly, the driving source comprises a motor, the transmission assembly comprises a driving gear connected to an output end of the motor and a first face gear and a second face gear engaged with the driving gear, respectively, wherein the first piston is connected to the first face gear, and the second piston is connected to the second face gear.

Specifically, the first piston cylinder assembly and the second piston cylinder assembly are configured such that an angle between the cylinders of the first piston cylinder assembly and the second piston cylinder assembly is between 0-180 degrees.

Specifically, the oral irrigator further comprises a valve assembly arranged in fluid communication between the nozzle and the output ends of the first piston cylinder assembly and the second piston cylinder assembly, wherein the valve assembly comprises a valve body in which the first working medium from the first piston cylinder assembly and the second working medium from the second piston cylinder assembly are mixed.

More specifically, the first working medium and the second working medium both comprises water. Preferably, the first piston cylinder assembly and the second piston cylinder assembly are configured such that the angle between the cylinders of the first piston cylinder assembly and the second piston cylinder assembly is 120-180 degrees. Preferably, the first piston cylinder assembly and the second piston cylinder assembly are configured such that the angle between the cylinders of the first piston cylinder assembly and the second piston cylinder assembly is 180 degrees.

More specifically, the first working medium comprises water, and the second working medium comprises air. Preferably, the first piston cylinder assembly and the second piston cylinder assembly are configured such that the angle between the cylinders of the first piston cylinder assembly and the second piston cylinder assembly is 0-60 degrees. Preferably, the first piston cylinder assembly and the second piston cylinder assembly are configured such that the angle between the cylinders of the first piston cylinder assembly and the second piston cylinder assembly is 0 degree.

Preferably, the nozzle comprises a nozzle body and a housing, and a first end of the nozzle body is in fluid communication with output ends of the first piston cylinder assembly and the second piston cylinder assembly; an outlet is defined on the housing, the housing is connected to a second end of the nozzle body, the housing and the nozzle body define an accommodating cavity in fluid communication with outside air; wherein the first working medium for oral irrigation and/or the second working medium for oral irrigation enters the accommodating cavity through the nozzle body and is sprayed out through the outlet after being mixed with the outside air.

Preferably, the present invention further provides an oral irrigator, comprising: a valve body; a valve cover connected to the valve body; a nozzle locking element non-rotatably accommodated in the valve cover and including an annular body and an elastic buckle extending inward from the body; and a nozzle comprising a joint end insertably engaged with the valve cover, the joint end defining a non-closed groove in a circumferential direction, wherein in a first state, the non-closed groove is engaged with the buckle to lock the nozzle to the valve cover, and when the nozzle is rotated to a second state, the non-closed groove is disengaged from the buckle to release lock. Specifically, the buckle is made of plastic material. Specifically, the number of the buckles is two. Specifically, the oral irrigator further comprises a nozzle positioning element accommodated in the valve cover, the nozzle positioning element is sleeve-shaped and has a positioning end surface extending inward at an end away from the nozzle, and the positioning end surface locates an end face of the nozzle when the nozzle is inserted into the valve cover. According to this embodiment, when the joint end of the nozzle is inserted into the valve cover, it is not necessary to correct the circumferential angular position of the joint end, that is, it is directly inserted into the valve cover at any circumferential angular position. During the insertion process, the joint end will first touch the elastic buckle. Since the buckle is elastic, when the force continues to be applied for insertion, the buckle will be elastically deformed and opened to allow the joint end to continue to be inserted inward. When the end face of the joint end abuts against the positioning end surface of the nozzle positioning element, the nozzle is rotated. When the groove of the joint end is rotated to a position corresponding to the buckle, the buckle enters the groove under the action of elastic force. Therefore, the nozzle and the valve cover are locked together. Conversely, when it is desired to disassemble the nozzle from the valve cover, the nozzle is rotated clockwise or counterclockwise, and the buckle will be opened by the non-groove surface of the joint end. At this time, the nozzle can be disassembled by pulling it out.

According to an embodiment of the present invention, the angle between the cylinders of the first cylinder and the second cylinder can be arbitrarily configured, and further, the configured angle between the cylinders can be related to the first working medium and the second working medium. In an example, when the first working medium and the second working medium both comprises water, the angle between the cylinders can be configured to be 180 degrees. In this way, continuous pumping water can be achieved, and vibration generated during pumping water can also be greatly reduced. In another example, when the first working medium comprises water and the second working medium comprises gas, such as air, the angle between the cylinders can be configured to be 0 degree. In this way, the first working medium and the second working medium can be pumped out simultaneously and mixed in the confluence port in the valve body, so that the mixed working medium, that is, a mixture of air and water, is sprayed out from the nozzle. Moreover, since compressed air is mixed in water, aeration and/or cavitation effects are generated when sprayed onto the surface to be cleaned, such as the surface of teeth. In addition, vibration will be reduced during work. It can be understood that, according to the present invention, in the presence of the first pumping assembly and the second pumping assembly, the oral irrigator produces less vibration during operation, and thus has a longer service life.

According to an embodiment of the present invention, it can be understood that, when considering the technical feature of the accommodating cavity communicating with gas of the housing of the nozzle, the embodiments described above can all spray out fluid mixed with air for oral irrigation. By configuring the accommodating cavity to be able to communicate with gas, when the fluid for oral irrigation is sprayed, it is mixed with the gas (such as air), or in other words, it entraps the gas, so that the gas-liquid mixture generates cavitation on the surface to be cleaned under a change in pressure, such as the surface of teeth, and improves the cleaning effect. For example, when cleaning teeth, the oxygen in the air that is carried enters the closed space, which is beneficial to kill the anaerobic bacteria between the teeth, and maintain oxygen supply between the teeth and healthy teeth.

### BRIEF DESCRIPTION OF THE DRAWINGS

FIG. 1 illustrates an oral irrigator according to one embodiment of the present invention;
FIG. 2 is an exploded view of a pumping assembly of the oral irrigator according to an embodiment as shown in FIG. 1 of the present invention;
FIG. 3 is an exploded view of a valve assembly of the oral irrigator according to an embodiment as shown in FIG. 1 of the present invention, which is located above FIG. 2 in an assembly direction and can be assembled with the pumping assembly;
FIG. 4 is an exploded view of a nozzle of the oral irrigator according to an embodiment as shown in FIG. 1 of the present invention, which is located above FIG. 3 in an assembly direction and can be assembled with the pumping assembly;
FIG. 5 is a perspective view of a valve body according to an embodiment as shown in FIG. 3 of the present invention, and;
FIG. 6 is a perspective view of a nozzle locking element in the valve seat according to an embodiment as shown in FIG. 3 of the present invention.

### DETAILED DESCRIPTION

In order to enable the objects, technical solutions and advantages of the present application to be more apparent, the present application will be further described in detail with reference to the drawings and the exemplary embodiments below. It is to be understood that the specific embodiments described herein are only used to explain but not limit the present application.

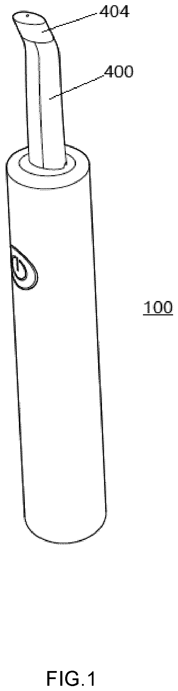

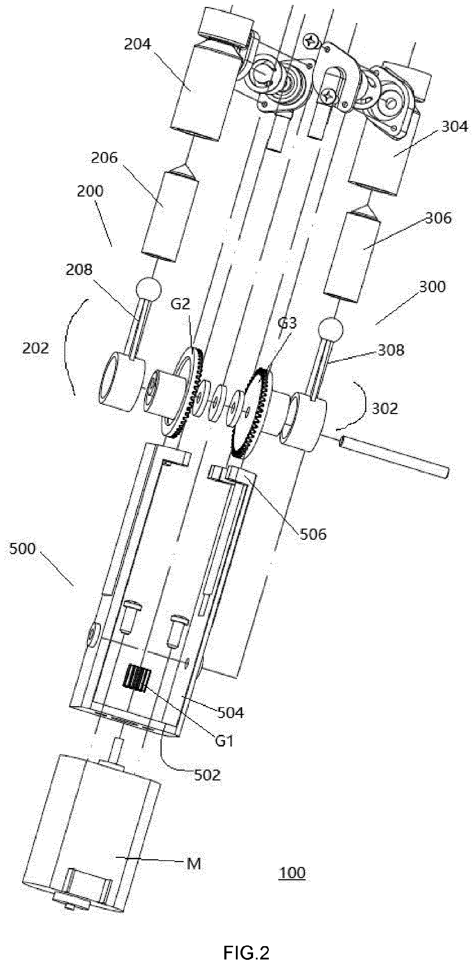

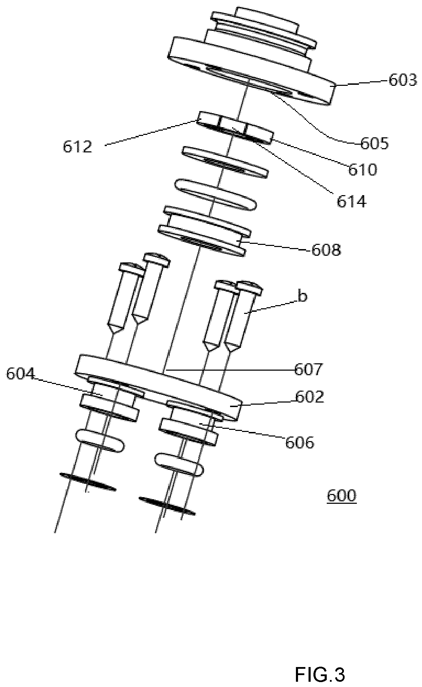

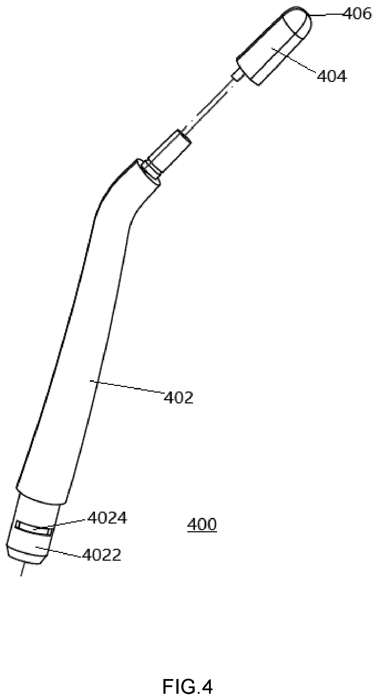

FIG. 1 illustrates an oral irrigator according to one embodiment of the present invention. FIG. 2 is an exploded view of a pumping assembly of the oral irrigator according to an embodiment as shown in FIG. 1 of the present invention. FIG. 3 is an exploded view of a valve assembly of the oral irrigator according to an embodiment as shown in FIG. 1 of the present invention. FIG. 4 is an exploded view of a nozzle of the oral irrigator according to an embodiment as shown in FIG. 1 of the present invention. Since the oral irrigator 100 has a long structure, it is shown by the pumping assembly of FIG. 2, valve assembly of FIG. 3 and nozzle of FIG. 4 as a whole, respectively, and it shall be understood that they are assembled subsequently. With reference to FIGS. 1-4, the oral irrigator 100 comprises a first pumping assembly 200, a second pumping assembly 300, and a nozzle 400. Specifically, the first pumping assembly 200 and the second pumping assembly 300 may both comprise a positive displacement pump, and the positive displacement pump may be, for example, a piston pump, a plunger pump, a gear pump, a sliding plate pump, or a diaphragm pump. In one example, the first pumping assembly 200 may be in the form of the piston pump, and the second pumping assembly 300 may be in the form of the diaphragm pump. In another example, the first pumping assembly 200 may be in the form of the gear pump, and the second pumping assembly 300 may be in the form of the plunger pump. In yet another example, the first pumping assembly 200 may be in the form of the plunger pump, and the second pumping assembly 300 may be in the form of the sliding pump. Based on these examples, those of ordinary skill in the art should easily understand that which form of the positive displacement pump used by the first pumping assembly 200 and the second pumping assembly 300 can be selected according to the conditions of use, and the present invention does not limit the specific form of the positive displacement pump. In the following introduction, for illustrative purposes herein, the first pumping assembly 200 takes the form of the piston pump (or comprises the piston pump), and the second pumping assembly 300 takes the form of the piston pump (or comprises the piston pump).

The first pumping assembly 200 comprises a first driving assembly and a first piston cylinder assembly, wherein the first driving assembly comprises a driving source and a first transmission assembly 202, and the first piston cylinder assembly comprises a first cylinder 204 and a first piston 206 movably connected to the first cylinder 204.

The second pumping assembly 300 comprises a driving assembly and a second piston cylinder assembly, wherein the second driving assembly comprises a driving source and a second transmission assembly 302, and the second piston cylinder assembly comprises a second cylinder 304 and a second piston 306 movably connected to the second cylinder 304.

In this embodiment according to the present invention, the driving source of the second driving assembly and the first driving assembly is a shared motor M.

The first transmission assembly 202 comprises a gear set and a connecting rod 208, wherein the gear set comprises a driving gear G1 connected to an output end of the motor M and a driven gear G2 engaged with the driving gear G1, wherein the driven gear G2 is a first face gear, one end of the connecting rod 208 is connected to the first face gear G2, and another end is connected to the first piston 206 of the first piston cylinder assembly in a transmission connection way.

The second transmission assembly 302 comprises a gear set and a connecting rod 308, wherein the gear set comprises a driving gear G1 shared with the first transmission assembly and a driven gear G3 engaged with the driving gear G1, wherein the driven gear G3 is a second face gear, one end of the connecting rod 308 being connected to the second face gear G3, and another end is connected to the second piston 306 of the second piston cylinder assembly in a transmission connection way.

More specifically, in this embodiment according to the present invention, the components from the driven gear G2 to the first cylinder 204 are substantially the same as the components from the driven gear G3 to the second cylinder 304. Moreover, preferably, the transmission ratio between the driven gear G2 and the driving gear G1 is also the same as that between the driven gear G3 and the driving gear G1. It can be understood that the transmission ratio between the driven gear G2 and the driving gear G1 and the transmission ratio between the driven gear G3 and the driving gear G1 can be configured such that the output is decelerated. Therefore, the radius of the driven gears G2 and G3 is greater than that of the driving gear G1. On the other hand, the driven gear G2 and the driven gear G3 are of the same shape, in order to make the transmission ratio the same.

According to this embodiment of the present invention, the connecting rod 208 and the connecting rod 308 are also substantially the same, wherein the first end of the connecting rod 208 is rotatably sleeved on an eccentric output shaft of the outer end surface of the first face gear G2, and the second end of the connecting rod 208 is hinged to the first piston 206. The first end of the connecting rod 308 is rotatably sleeved on the eccentric output shaft of the outer end surface of the second end gear G3, and the second end of the connecting rod 308 is hinged to the second piston 306.

Hereinafter, the first pumping assembly 200 and the second pumping assembly 300 will be described from the perspective of assembly.

According to this embodiment of the present invention, the oral irrigator further comprises a base 500 to which the aforementioned first pumping assembly 200 and the second pumping assembly 300 are fixedly mounted. Specifically, as shown in the figure, the base 500 comprises a bottom wall 502, a side wall 504 extending vertically upward from the bottom wall 502, and a top wall 506 extending horizontally inward from the side wall 504, wherein the bottom wall 502, the side wall 504 and the top wall 506 define a mounting cavity therein. The motor M is fixed on the bottom wall 502, and the output shaft of the motor M passes through the bottom wall 502 in the vertical direction into the mounting cavity. The driving gear G1 is fixed on the output shaft of the motor M. A horizontal pin shaft passes through the aforementioned first face gear G2 and second face gear G3 and is fixed to the side wall 504 of the base 500. The first face gear G2 and the second face gear G3 fixed by the pin shaft are arranged on both sides of the driving gear G1, and their tooth surfaces face each other, each engaged with the driving gear G1.One or more gear shims may be arranged respectively on the pin shafts between the first face gear G2 and the second face gear G3 to adjust the distance therebetween so as to fit with the driving gear G1.The first cylinder 204 and the second cylinder 304 are positioned in the accommodating cavity of the base 500, and their cylinder side faces are respectively attached to the recesses formed by the side wall 504 of the base 500. The first cylinder 204 and the second cylinder 304 are also fixed to the top wall 506 of the base 500 in the vertical direction, and the details will be described later. In such a way, the motion range of the connecting rod 208 and the first piston 206 arranged between the first face gear G2 and the first cylinder 204 is limited, and similarly, the motion range of the connecting rod 308 and the second piston 306 arranged between the second face gear G3 and the second cylinder 304 is also limited.

It is to be understood that each of the first cylinder 204 and the second cylinder 304 described herein can adopt a conventional cylinder structure design. Here, as shown in the figure, in this embodiment according to the present invention, each cylinder 204, 304 is provided with a fluid outlet in the vertical direction, and on the side wall of each cylinder 204, 304 is provided a fluid inlet. The fluid pipeline can be directly connected to the fluid inlet. It is to be understood that the fluid pipelines connected to the fluid inlets of each cylinder 204, 304 can lead to a fluid source, such as a container containing fluid. If the fluid is water, the container can be, for example, a kettle. If the fluid is air, the fluid pipeline can be directly connected to outside atmosphere. The fluid inlet and the pipeline connected to the inlet are not the focus of the present invention and can be easily known by those of ordinary skill in the art based on the disclosure of this specification, which is thus not detailed here.

Next, other structures in fluid communication with the first pumping assembly 200 and the second pumping assembly 300 are further described.

The nozzle 400 is in fluid communication with the output ends of the first pumping assembly 200 and the second pumping assembly 300.

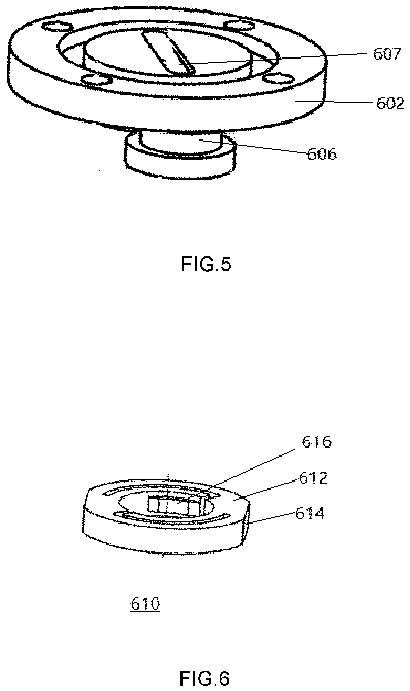

According to this embodiment of the present invention, the oral irrigator 100 further comprises a valve assembly 600 arranged in fluid communication between the output ends of the first piston cylinder assembly and the second piston cylinder assembly and the nozzle 400. Specifically, the valve assembly 600 comprises a valve body 602 and a valve cover 603. The valve body 602 comprises two joints 604, 606 extending downward from the body of the valve body and a confluence port 607 that is in fluid communication with the two joints 604, 606, and the structure details thereof can be seen in FIG. 5, which is a perspective view of the valve body according to the embodiment as shown in FIG. 3 of the present invention. It can be understood that at the junction of the joints 604, 606 of the valve body 602 and the first cylinder 204 and the second cylinder 304 may also be provided with sealing elements, non-return elements, and the like. Here, the sealing element may be an O-ring seal, and the non-return element may be a diaphragm. The joint 604 can be matched with and fluidly communicated with the fluid outlet of the aforementioned first cylinder 204, and similarly, the joint 606 can be matched with and fluidly communicated with the fluid outlet of the aforementioned second cylinder 304. The fluid flowing out from the first cylinder 204 and the second cylinder 304 can be converged in the confluence port 607. Further, the valve body 602 also defines an annular groove on the upper end surface of the valve body and at the circumferential outer side of the confluence port 607, and the groove is used for sealing with the sealing element.

According to this embodiment of the present invention, on the one hand, the valve cover 603 is adaptable to the valve body 602, and on the other hand, the valve cover 603 is also used to clamp or fix the nozzle 400. Specifically, the valve cover 603 defines a cavity 605 in which the nozzle positioning element 608 and the nozzle locking element 610 can be accommodated, wherein the nozzle locking element 610 can be arranged downstream of the nozzle positioning element 608. In other embodiments, if the structure of the nozzle allows, the nozzle locking element 610 may also be arranged upstream of the nozzle positioning element 608. Sealing elements, such as the O-ring seals and/or gaskets, are also arranged between the nozzle positioning element 608 and the nozzle locking element 610. The nozzle positioning element 608, the nozzle locking element 610, and the sealing elements therebetween are in a clearance fit with the inner wall of the cavity between the valve cover 603 and the valve body 602 as a whole. More specifically, the nozzle positioning element 608 is a positioning sleeve, whose inner surface is substantially adapted to the outer surface of the joint end of the nozzle 400. The positioning sleeve has a positioning end surface extending inward at one end (distal end) away from the nozzle 400. As such, when the nozzle 400 is inserted, it is restricted by the positioning end surface when it reaches the distal opening and cannot be inserted further. With reference to FIG. 6, it is a perspective view of the nozzle locking element 610 in the valve seat according to the embodiment as shown in FIG. 3 of the present invention. The nozzle locking element 610 may be made of a non-rigid material, such as a plastic material, e.g., plastic, and further a POM material. The nozzle locking element 610 comprises an annular body 612. On a part of the circumferential outer surface of the annular body 610 is further provided a positioning surface 614. As in this embodiment, unlike the circular arc shape of other parts, the positioning surface 614 is flat, and the flat positioning surface 614 is formed by, for example, cutting off a part of the material or is integrally formed from the beginning. Correspondingly, in the cavity 605 of the valve cover 603, a surface adapted to the positioning surface is also provided such that the annular body 612 is restricted inside. The annular body 612 defines a hollow portion therein, and at least one elastic buckle 616 extends inward from the annular body 612. The extent of the elastic buckle 616 extending inward is configured to be an extent of elastic engagement with the surface of the joint end of the nozzle 400.

Next, the assembly of the lower valve body 602, the valve cover 603 and the base 500 will be described from the perspective of assembly.

The fluid outlets of the first cylinder 204 and the second cylinder 304 are respectively connected to the two joints 604, 606 of the valve body 602. The nozzle positioning element 608, the nozzle locking element 610 and the sealing elements are placed in the cavity 605 of the valve cover 603, successively pass through the through holes of the valve cover 603 and the valve body 602 through fasteners, such as four screws b, and fix the valve cover 603 and the valve body 602 to the top wall 506 of the base 500. In this way, not only the valve body 602 and the valve cover 603 are sealed and fixed to each other, but the first cylinder 204 and the second cylinder 304 are also restricted in the vertical direction as shown in the figure.

In conjunction with FIG. 4, the valve nozzle 400 comprises a nozzle body 402. The joint end 4022 of the nozzle body 402 is designed in length to be able to extend into the aforementioned valve cover 603, and the end surface of the joint end 4022 can abut against the positioning end surface of the nozzle positioning element 608. The joint end 4022 of the nozzle body 402 is designed in the circumferential direction to be able to cooperate with the nozzle positioning element 608 and the nozzle locking element 610 in the valve cover 603. Specifically, according to the aforementioned two design requirements, at a suitable position of the joint end 4022 of the nozzle body 402, at least a section of non-closed annular groove 4024 is provided in the circumferential direction, and the groove 4024 can be cooperated with the aforementioned nozzle locking element 610.

Specifically, when the joint end 4022 of the nozzle body 402 is inserted into the valve cover 603, it is not necessary to correct the circumferential angular position of the joint end 4022, that is, it is directly inserted into the valve cover 603 at any circumferential angular position. During the insertion process, the joint end 4022 will first touch the elastic buckle 616. Since the buckle 616 is elastic, when the force continues to be applied for insertion, the buckle will be elastically deformed and opened to allow the joint end 4022 to continue to be inserted inward. When the end face of the joint end 4022 abuts against the positioning end surface of the nozzle positioning element 608, the nozzle body 402 is rotated. When the groove 4024 of the joint end 4022 is rotated to a position corresponding to the buckle 616, the buckle 616 enters the groove 4024 under the action of elastic force. Therefore, the nozzle body 402 and the valve cover 603 are locked together. Conversely, when it is desired to remove the nozzle body 402 from the valve cover 603, the nozzle body 402 is rotated clockwise or counterclockwise, and the buckle 616 will be opened by the non-groove surface of the joint end 4022. At this time, the nozzle body 402 can be disassembled by pulling it out.

As shown in the figure, the nozzle 400 further comprises a housing 404, on which an outlet 406 is defined. The housing 404 is connected to the second end of the nozzle body 402. The housing 404 and the nozzle body 402 define an accommodating cavity communicating with the gas. Wherein, the fluid enters the accommodating cavity through the valve body 602, the valve cover 603, and the nozzle body 402. Because the fluid has a certain speed under the pump action of the pumping assembly to form a jet flow that forms a negative pressure in the accommodating cavity, the outside air flows into the accommodating cavity under the action of negative pressure and is sprayed out through the outlet 406 after being mixed with the gas. It is to be understood that, in addition to the outlet 406, the communication between the accommodating cavity and the gas can be achieved in the manner of further providing a vent hole for ventilating with the outside on the housing 404. It is also to be understood that the communication between the accommodating cavity and the gas can be achieved in the manner of providing a vent hole for ventilating with the outside on the nozzle body 402.

According to an embodiment of the present invention, in the first pumping assembly 200 and the second pumping assembly 300, the angle between the cylinders of the first cylinder 204 and the second cylinder 304 can be set arbitrarily between 0-180 degrees.

According to an embodiment of the present invention, in the first pumping assembly 200 and the second pumping assembly 300, the first working medium for oral irrigation and the second working medium for oral irrigation can respectively flow into the fluid inlets of each cylinder 204, 304, wherein the first working medium and the second working medium may be the same or different. For example, in an example, the first working medium and the second working medium may both comprise water. In an example, the first working medium may comprise water, and the second working medium may comprise gas, such as air.

According to an embodiment of the present invention, the angle between the cylinders of the first cylinder 204 and the second cylinder 304 may be configured such that it is related to the first working medium and the second working medium. In an example, when the first working medium and the second working medium both comprises water, the angle between the cylinders may be configured to be between 120-180 degrees, and preferably it may be configured to be 180 degrees, In this way, when the first cylinder 204 basically completes pumping water to the valve body 602, the second cylinder 304 starts to pump water to the valve body 602, that is, it pumps water to the valve body 602 alternately, thereby achieving continuous pumping water. Moreover, the simultaneous operation of the two cylinders 204 and 304 can greatly reduce the vibration generated during pumping water. In another example, when the first working medium comprises water and the second working medium comprises gas, such as air, the angle between the cylinders may be configured to be between 0-60 degrees, and preferably it may be configured to 0 degree. In this way, the first working medium and the second working medium can be pumped out simultaneously and mixed in the confluence port 607 in the valve body 602, so that the mixed working medium, that is, a mixture of air and water, is sprayed out from the nozzle 400. Moreover, since compressed air is mixed in water, aeration and/or cavitation effects are generated when sprayed onto the surface to be cleaned, such as the surface of teeth. In addition, vibration will be reduced during work. Those of ordinary skill in the art can adjust the angle between the cylinders of the first cylinder 204 and the second cylinder 304 arbitrarily according to these two exemplary examples to achieve their specific purposes. The foregoing exemplary embodiments are not intended to limit the angle between the cylinders. It can be understood that, according to the present invention, in the presence of the first pumping assembly 200 and the second pumping assembly 300, the oral irrigator 100 produces less vibration during operation, and thus has a longer service life.

According to an embodiment of the present invention, it can be understood that, when considering the technical feature of the accommodating cavity communicating with gas of the housing 404 of the nozzle 400, the embodiments described above can all spray out fluid mixed with air for oral irrigation. By configuring the accommodating cavity to be able to communicate with gas, when the fluid for oral irrigation is sprayed, it is mixed with the gas (such as air), or in other words, it entraps the gas, so that the gas-liquid mixture generates cavitation on the surface to be cleaned under a change in pressure, such as the surface of teeth, and improves the cleaning effect. For example, when cleaning teeth, the oxygen in the air that is carried enters the closed space, which is beneficial to kill the anaerobic bacteria between the teeth, and maintain oxygen supply between the teeth and healthy teeth.

The technical features of the above-mentioned embodiments can be combined arbitrarily. In order to make the description concise, all possible combinations of the various technical features in the above-mentioned embodiments are not described. However, as long as there is no contradiction in the combination of these technical features, they should be considered as the scope recited in this specification.

The above embodiments only illustrate several implementations of the present invention, whose description is relatively specific and detailed, but it shall not be understood as a limitation on the scope of the invention patent. It shall be pointed out that for those of ordinary skill in the art, several modifications and improvements can be made without departing from the concept of the present invention, and these all fall within the protection scope of the present invention. Therefore, the protection scope of the present invention patent shall be defined by the appended claims.

## Claims

1. An oral irrigator, comprising:
a first pumping assembly used for pumping a first working medium for oral irrigation;
a second pumping assembly used for pumping a second working medium for oral irrigation; and
a nozzle in fluid communication with output ends of the first pumping assembly and the second pumping assembly,
wherein the first working medium for oral irrigation and/or the second working medium for oral irrigation is sprayed out by means of the nozzle.

2. An oral irrigator according to claim 1, **characterized in that** the first pumping assembly and the second pumping assembly both comprise a positive displacement pump.

3. An oral irrigator according to claim 2, **characterized in that** the positive displacement pump is a piston pump, a plunger pump, a gear pump, a sliding plate pump or a diaphragm pump.

4. An oral irrigator according to claim 1, **characterized in that** the first pumping assembly and the second pumping assembly both comprise a piston pump.

5. An oral irrigator according to claim 4, **characterized in that** the first pumping assembly and the second pumping assembly comprise a driving assembly and a piston cylinder assembly, wherein the piston cylinder assembly is driven by the driving assembly.

6. An oral irrigator according to claim 5, **characterized in that** the piston cylinder assembly comprises a cylinder and a piston movably connected with the cylinder.

7. An oral irrigator according to claim 6, **characterized in that** the driving assembly comprises a driving source and a transmission assembly.

8. An oral irrigator according to claim 7, **characterized in that** the driving source comprises a motor.

9. An oral irrigator according to claim 8, **characterized in that** the transmission assembly comprises a gear set and a connecting rod, wherein the gear set comprises a driving gear connected to an output end of the motor and a driven gear engaged with the driving gear, one end of the connecting rod is connected to the driven gear, and another end of the connecting rod is connected to the piston of the piston cylinder assembly in a transmission connection way .

10. An oral irrigator according to claim 9, **characterized in that** the driven gear is a face gear.

11. An oral irrigator according to claim 1, **characterized in that** the first pumping assembly and the second pumping assembly are configured such that both can operate simultaneously to spray out mixed the first working medium and the second working medium at the nozzle.

12. An oral irrigator according to claim 1, **characterized in that** the first pumping assembly and the second pumping assembly are configured such that both can alternately operate to spray out mixed the first working medium and the second working medium at the nozzle.

13. An oral irrigator according to claim 11 or 12, **characterized in that** the first working medium and the second working medium both comprises water.

14. An oral irrigator according to claim 11 or 12, **characterized in that** the first working medium comprises water, and the second working medium comprises air.

15. An oral irrigator according to claim 1, **characterized in that** the nozzle comprises a nozzle body and a housing, a first end of the nozzle body is in fluid communication with output ends of the first pumping assembly and the second pumping assembly;
an outlet is defined on the housing, the housing is connected to a second end of the nozzle body, and the housing and the nozzle body define an accommodating cavity in fluid communication with outside air;
wherein the first working medium for oral irrigation and/or the second working medium for oral irrigation enters the accommodating cavity through the nozzle body and is sprayed out through the outlet after being mixed with the outside air.

16. An oral irrigator, comprising:
a base;
a driving assembly fixed to the base;
a first piston cylinder assembly fixed to the base and driven by the driving assembly for pumping a first working medium for oral irrigation;
a second piston cylinder assembly fixed to the base and driven by the driving assembly for pumping a second working medium for oral irrigation; and
a nozzle in fluid communication with output ends of the first piston cylinder assembly and the second piston cylinder assembly,
wherein the first working medium for oral irrigation and/or the second working medium for oral irrigation is sprayed out by means of the nozzle.

17. An oral irrigator according to claim 16, **characterized in that** the first piston cylinder assembly comprises a first cylinder and a first piston movably connected with the first cylinder, and the second piston cylinder assembly comprises a second cylinder and a second piston movably connected with the second cylinder; the first piston and the second piston is driven by the driving assembly.

18. An oral irrigator according to claim 17, **characterized in that** the driving assembly comprises a driving source and a transmission assembly, the driving source comprises a motor, the transmission assembly comprises a driving gear connected to an output end of the motor and a first face gear and a second face gear engaged with the driving gear, respectively, wherein the first piston is connected to the first face gear, and the second piston is connected to the second face gear.

19. An oral irrigator according to claim 16, **characterized in that** the first piston cylinder assembly and the second piston cylinder assembly are configured such that an angle between the cylinders of the first piston cylinder assembly and the second piston cylinder assembly is between 0-180 degrees.

20. An oral irrigator according to claim 16, **characterized in that** the oral irrigator further comprises a valve assembly arranged in fluid communication between the output ends of the first piston cylinder assembly and the second piston cylinder assembly and the nozzle, wherein the valve assembly comprises a valve body in which the first working medium from the first piston cylinder assembly and the second working medium from the second piston cylinder assembly are mixed.

21. An oral irrigator according to claim 20, **characterized in that** the first working medium and the second working medium both comprises water.

22. An oral irrigator according to claim 21, **characterized in that** the first piston cylinder assembly and the second piston cylinder assembly are configured such that an angle between the cylinders of the first piston cylinder assembly and the second piston cylinder assembly is 120-180 degrees.

23. An oral irrigator according to claim 21, **characterized in that** the first piston cylinder assembly and the second piston cylinder assembly are configured such that an angle between the cylinders of the first piston cylinder assembly and the second piston cylinder assembly is 180 degrees.

24. An oral irrigator according to claim 20, **characterized in that** the first working medium comprises water, and the second working medium comprises air.

25. An oral irrigator according to claim 24, **characterized in that** the first piston cylinder assembly and the second piston cylinder assembly are configured such that an angle between the cylinders of the first piston cylinder assembly and the second piston cylinder assembly is 0-60 degrees.

26. An oral irrigator according to claim 24, **characterized in that** the first piston cylinder assembly and the second piston cylinder assembly are configured such that an angle between the cylinders of the first piston cylinder assembly and the second piston cylinder assembly is 0 degree.

27. An oral irrigator according to claim 16, **characterized in that** the nozzle comprises a nozzle body and a housing, a first end of the nozzle body is in fluid communication with the output ends of the first piston cylinder assembly and the second piston cylinder assembly;
an outlet is defined on the housing, the housing is connected to a second end of the nozzle body, and the housing and the nozzle body define an accommodating cavity in fluid communication with outside air;
wherein the first working medium for oral irrigation and/or the second working medium for oral irrigation enters the accommodating cavity through the nozzle body and is sprayed out through the outlet after being mixed with the outside air.

28. An oral irrigator, comprising:
a valve body;
a valve cover connected to the valve body;
a nozzle locking element non-rotatably accommodated in the valve cover and including an annular body and an elastic buckle extending inward from the body; and
a nozzle comprising a joint end insertably engaged with the valve cover, the joint end defining a non-closed groove in a circumferential direction; in a first state, the non-closed groove is engaged with the buckle to lock the nozzle to the valve cover, and when the nozzle is rotated to a second state, the non-closed groove is disengaged from the buckle to release lock.

29. An oral irrigator according to claim 28, **characterized in that** the buckle is made of plastic material.

30. An oral irrigator according to claim 28, **characterized in that** the number of the buckles is two.

31. An oral irrigator according to claim 28, **characterized in that** the oral irrigator further comprises a nozzle positioning element accommodated in the valve cover, which is sleeve-shaped and has a positioning end surface extending inward at an end away from the nozzle, the positioning end surface locates an end face of the nozzle when the nozzle is inserted into the valve cover.
